# EUROPEAN PATENT APPLICATION

(11) **EP 4 681 985 A1**
(43) Date of publication of application: **21.01.2026**
(21) Application number: 24934361.7
(22) Date of filing: 28.06.2024
(51) Int. Cl.: B60M 3/00

(54) **DUAL-CURRENT VEHICLE POWER SUPPLY CONVERSION SYSTEM AND METHOD, AND VEHICLE AND STORAGE MEDIUM**

(30) Priority: 27.05.2024 CN 202410665268
(71) Applicant: CRRC Changchun Railway Vehicles Co., Ltd., Changchun, Jilin 130000 (CN)
(72) Inventor: SUN, Wenbin, Changchun, Jilin 130000 (CN); LI, Xuefei, Changchun, Jilin 130000 (CN); ZHANG, Yuguang, Changchun, Jilin 130000 (CN); LIU, Zhengwei, Changchun, Jilin 130000 (CN)
(74) Representative: v. Bezold & Partner Patentanwälte - PartG mbB
(86) International application number: PCT/CN2024/102642
(87) International publication number: WO 2025/245956

(57) **Abstract**

The present disclosure provides a dual-voltage train power supply conversion system, a method, a train, and a storage medium for power supply conversion of a dual-voltage train between a regional railroad and an urban rail. The system includes: a detection unit, a conversion unit, a power supply unit, and a central control unit. The detection unit includes a landmark detection module, a train speed detection module, a train traveling duration detection module, and a train power supply mode detection module. The central control unit comprises an arithmetic module, a first determination module, a second determination module, and a storage module, wherein the arithmetic module is configured to calculate the mileage of the train; the first determination module is configured to determine whether the train successfully detects each of the landmarks; the second determination module is configured to determine whether the train reaches each of the landmarks; and the storage module is configured to store distance information between two adjacent landmarks and a landmark level classification mode. The present disclosure classifies the landmarks in the conversion region and enables the train to perform corresponding actions at different levels of landmarks, which improves the reliability of the dual-voltage train alternating current/direct current power supply conversion.

## Description

### CROSS-REFERENCE TO RELATED APPLICATION

The present disclosure claims priority to Chinese patent application No. 2024106652680, filed with the Chinese Patent Office on May 27, 2024, entitled "DUAL-VOLTAGE TRAIN POWER SUPPLY CONVERSION SYSTEM, METHOD, TRAIN, AND STORAGE MEDIUM", the entire contents of which are incorporated herein by reference.

### TECHNICAL FIELD

The present disclosure relates to the field of dual-voltage trains, and in particular to a dual-voltage train power supply conversion system, a method, a train, and a storage medium.

### BACKGROUND ART

With the increasing travel demands of society, the continuous expansion of central cities, and the rapid development of urbanization, the rail transit train, as one of the most important transportation tools in cities, has gradually expanded its application scope from the traditional urban inner areas to intercity areas. Under this background, a train that can be used in both urban and rural areas, i.e., a regional railway train, has emerged. However, the traditional urban rail transit train is powered by the 1500V/750V direct current, and the regional railroad is powered by 27.5KV/25KV industrial-frequency single-phase alternating current. There are differences in both the current level and current type. Therefore, in order to make the regional railway train more convenient, a dual-voltage train has gradually emerged in recent years.

The dual-voltage train is provided with both alternating-current and direct-current power supply systems. It can realize fully automatic conversion driving through the alternating current/direct current power supply conversion system when traveling between the regional railroad and the urban rail transit. In the prior art, the rail of the alternating current/direct current conversion region is usually partitioned, and ground landmarks are provided in each rail partition. The dual-voltage train triggers the train system to perform different actions based on the ground landmark signals received from different rail partitions, so as to complete automatic alternating current/direct current conversion. Some prior arts propose to provide an identification system simultaneously near the ground landmarks, so that the driver can reliably identify them. However, the triggering action of the train power supply conversion by each ground landmark and the manual identification by the driver are, to a certain extent, uncontrollable. Therefore, the prior dual-voltage train power supply conversion system has the disadvantage of low reliability. The unreliable identification of the landmarks has an impact on the electrical apparatus and operation of the train, which may even lead to major safety accidents in severe cases.

### SUMMARY

In view of this, an objective of the present disclosure is to provide a dual-voltage train power supply conversion system, a method, a train, and a storage medium, so as to improve the reliability of the dual-voltage train power supply conversion.

In a first aspect, the embodiments of the present disclosure provide a dual-voltage train power supply switching system.

The system includes: a detection unit, a conversion unit, a power supply unit, and a central control unit.

The detection unit includes a landmark detection module, a train speed detection module, a train traveling duration detection module, and a train power supply mode detection module, wherein the landmark detection module is configured to detect landmarks, so as to trigger an action of the conversion unit; the train speed detection module is configured to measure a train traveling speed; the train traveling duration detection module is configured to detect a duration of the train passing through each of the landmarks; and the train power supply mode detection module is configured to detect a power supply status of the train.

The conversion unit is configured to convert the power supply unit of the train.

The power supply unit includes a direct-current power supply module and an alternating-current power supply module, and the power supply unit is connected to the detection unit and the conversion unit respectively.

The central control unit includes an arithmetic module, a first determination module, a second determination module, and a storage module, wherein the central control unit is connected to the detection unit and the conversion unit respectively; the arithmetic module is configured to calculate a mileage of the train according to a train traveling speed and the duration of the train passing through each of the landmarks; the first determination module is configured to determine whether the train successfully detects each of the landmarks; the second determination module is configured to determine whether the train reaches each of the landmarks; the storage module is configured to store distance information between two adjacent landmarks and a landmark level classification mode; and the landmark level classification mode includes at least two landmark levels.

The number of the landmarks is at least five.

Preferably, the landmark level classification mode includes a first level landmark, a second level landmark, and a third level landmark, and the landmark detection module detects the first level landmark, the second level landmark, and the third level landmarks in sequence from front to back according to a train traveling direction.

Preferably, the first determination module is connected to the landmark detection module, and the second determination module is connected to the arithmetic module and the storage module respectively.

The system further includes an audio-visual prompt unit; the audio-visual prompt unit is connected to the detection unit and the central control unit respectively; and the audio-visual prompt unit includes a sound prompt module, a light prompt module, and a display screen module.

The system further includes a manual conversion unit, and the manual conversion unit is connected to the detection unit and the central control unit respectively.

The detection unit further includes an image acquisition recognition module, and the image acquisition recognition module is connected to the display screen module.

In a second aspect, the embodiments of the present disclosure provide a dual-voltage train power supply conversion method, wherein the method is applied to the dual-voltage train power supply conversion system.

The method includes the following steps:
step S1: classifying the five landmarks in the power supply conversion region into different levels, wherein the first level landmark includes landmark 1; the second level landmark includes landmark 2; and the third level landmark includes landmark 3, landmark 4, and landmark 5;
step S2: detecting the first level landmark by the detection unit when the train reaches the first level landmark, and determining whether the first level landmark is successfully detected by the central control unit:
step S21: starting to calculate the mileage Lm of the train by the central control unit when the first level landmark is successfully detected by the train, and controlling the train to continue traveling; and detecting other landmarks in sequence by the detection unit when the train sequentially reaches the other landmarks, and determining whether the other landmarks are detected successfully by the central control unit:
step S211: performing a second action, a third action, a fourth action, and a fifth action in sequence when the other landmarks are successfully detected by the train;
step S212: performing the second action, the third action, the fourth action, and the fifth action in sequence when the central control unit sequentially determines that the train reaches the other landmarks in sequence via the mileage Lm of the train, in response to the train failing to detect the other landmarks;
step S22: controlling the train to continue traveling when the train fails to detect the first level landmark; and detecting the second level landmark by the detection unit when the train reaches the second level landmark, and determining whether the second level landmark is successfully detected by the central control unit:
step S221: performing the second action when the second level landmark is successfully detected by the train, and starting to calculate a mileage Ln of the train again by the central control unit at the same time; and detecting each third level landmark in sequence by the detection unit when the train sequentially reaches each of the third level landmarks, and sequentially determining whether each of the third level landmarks is successfully detected by the central control unit:
step S2211: performing the third action, the fourth action, and the fifth action in sequence when each of the third level landmarks is successfully detected by the train;
step S2212: performing the third action, the fourth action, and the fifth action in sequence when the central control unit determines that the train sequentially reaches each of the third level landmarks via the mileage Ln of the train, in response to the train failing to detect each of the third level landmarks, wherein
the second action specifically includes: performing a coasting command by the train, reducing a load of an air conditioner of the train to 0, and performing a disconnecting action on an auxiliary contactor and a traction contactor;
the third action specifically includes: disconnecting a vacuum circuit breaker;
the fourth action specifically includes: performing a secondary detection on the conversion unit and the power supply unit by the train, forcibly disconnecting the vacuum circuit breaker, and switching the alternating current/direct current conversion switch to the alternating-current power supply module or the direct-current power supply module;
the fifth action specifically includes: connecting the vacuum circuit breaker, performing a disconnecting or connecting action on the traction converter and the traction transformer, and performing a disconnecting or connecting action on a high-speed circuit breaker; and
step S3: the train completing the power supply conversion.

Preferably, the fifth action further includes:
performing the disconnecting action on the high-speed circuit breaker and performing the connecting action on the traction converter and the traction transformer when the train switches from the direct-current power supply module to the alternating-current power supply module; or performing the disconnecting action on the traction converter and the traction transformer and performing the connecting action on the high-speed circuit breaker when the train switches from the alternating-current power supply module to the direct-current power supply module.

In a third aspect, the embodiments of the present disclosure further provide a dual-voltage train, wherein the train includes any one of the foregoing dual-voltage train power supply conversion systems.

In a third aspect, the embodiments of the present disclosure further provide a storage medium, wherein the storage medium is readable and writable in a computer, and the storage medium is configured to store one of the foregoing dual-voltage train power supply conversion methods.

The present disclosure includes the following beneficial effects.

The present disclosure provides the dual-voltage train power supply conversion system, the method, the train, and the storage medium. In the existing dual-voltage train, which is located on alternating current/direct current conversion region, on the basis of automatically detecting each landmark and executing the corresponding actions of the electrical component on the train upon successful detection, the present disclosure further classifies levels of the landmarks beside the rail of the alternating current/direct current power supply conversion region. By taking the first level landmark and the second level landmark as two start points for calculating the mileage, and by comparing the distance of the two adjacent landmarks prestored in the system with the mileage of the train, it determines whether the train reaches the third level landmark, and performs the train power supply conversion action corresponding to each landmark when the determination is successful. This overcomes the shortcomings in the prior art that the corresponding conversion function of the train is affected and the electrical apparatus on the train is damaged when the landmark detection fails. By using the first level landmark and the second level landmark to form a dual insurance, when the first level landmark is successfully detected, it ensures that the train can still normally perform the conversion action corresponding to the second level landmark even if the detection to the second level landmark is failed; and when the first level and/or the second level landmark is successfully detected, it ensures that the high-voltage appliances of the train can be reliably converted at each of the third level landmarks even if the detection to the third level landmark is failed, which improves the reliability of the dual-voltage train alternating current/direct current power supply conversion.

In the dual-voltage train power supply conversion system, the method, the train, and the storage medium of the present disclosure, by providing the audio-visual prompt unit, it reminds the driver to promptly observe the high-voltage device switching state of the train, so as to ensure that the train automatically triggers the switch or circuit breaker on the train to perform corresponding actions when passing through each landmark; and at the same time, by providing the manual conversion unit, it realizes the manual control by the driver when the automatic triggering fails, so as to further ensure the reliable conversion of the train alternating current/direct current power supply.

In the dual-voltage train power supply conversion system, the method, the train, and the storage medium of the present disclosure, by providing the image acquisition recognition module to collect and identify the text prompt signs at each landmark, and by providing the display screen module to facilitate the driver viewing, it overcomes the defect that the driver cannot clearly view the text prompt signs under special weather conditions, which ensures the reliable monitoring of the driver and guarantees the reliability of the train alternating current/direct current power supply conversion.

In order to make the above objectives, features, and advantages of the present disclosure more obvious and understandable, the following preferable embodiments, together with the drawings, are described in detail as follows.

### BRIEF DESCRIPTION OF DRAWINGS

In order to more clearly illustrate the technical solutions in the embodiments of the present disclosure, the drawings to be used in the embodiments will be briefly introduced below. It is to be understood that the following drawings only show some embodiments of the present disclosure, and therefore should not be regarded as a limitation of the scope. For persons of ordinary skill in the field, other relevant drawings can be obtained according to these drawings without inventive efforts.
FIG. 1 shows a logic block diagram of a dual-voltage train power supply conversion system in the embodiments of the present disclosure;
FIG. 2 shows a conversion schematic diagram from a direct-current power supply region to an alternating-current power supply region of a dual-voltage train power supply conversion system in the embodiments of the present disclosure;
FIG. 3 shows a conversion schematic diagram from an alternating-current power supply region to a direct-current power supply region of a dual-voltage train power supply conversion system in the embodiments of the present disclosure;
FIG. 4 shows a topology diagram of a high-voltage circuit of a dual-voltage train power supply conversion system in the embodiments of the present disclosure; and
FIG. 5 shows a flow diagram of a conversion method for a dual-voltage train power supply conversion system in the embodiments of the present disclosure.

### DETAILED DESCRIPTION OF EMBODIMENTS

In order to make the objectives, technical solutions, and advantages of the embodiments of the present disclosure clearer, the technical solutions in the embodiments of the present disclosure will be clearly and completely described in conjunction with the drawings in the embodiments of the present disclosure. It is clear that the embodiments described are partial embodiments of the present disclosure, but not all of the embodiments. The components in the embodiments of the present disclosure generally described and shown in the drawings herein can be arranged and designed in multiple different configurations. Therefore, the following detailed description of embodiments of the present disclosure provided in the drawings is not intended to limit the scope of the present disclosure for which protection is claimed, but rather represents only selected embodiments of the present disclosure. Based on the embodiments of the present disclosure, each of the other embodiments obtained by a person of ordinary skill in the art without inventive efforts, shall fall within the scope of protection of the present disclosure.

### Embodiment 1

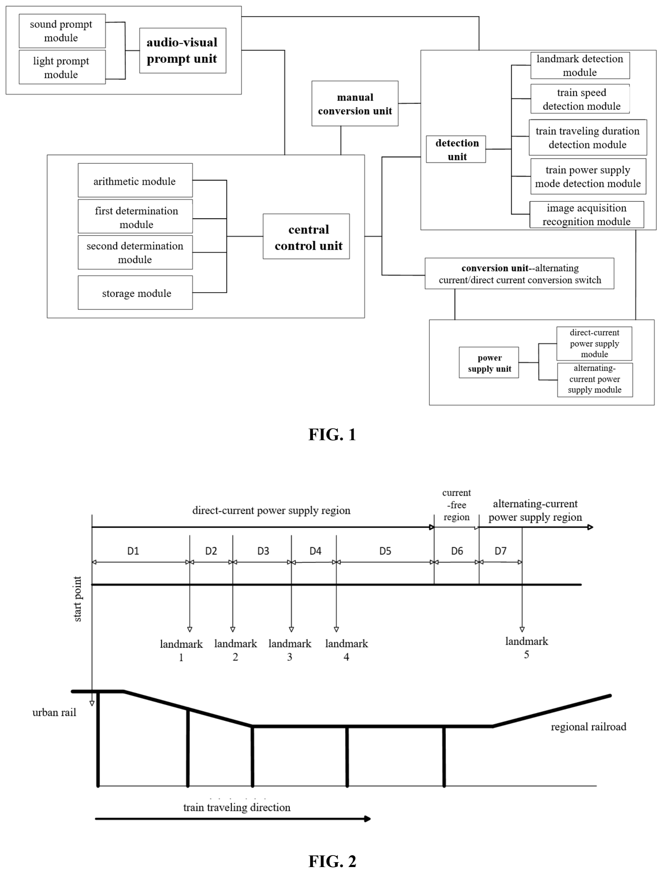

FIG. 1 shows a logic block diagram of a dual-voltage train power supply conversion system provided by Embodiment 1 of the present disclosure. The system includes: a detection unit, a conversion unit, a power supply unit, and a central control unit.

The detection unit includes a landmark detection module, a train speed detection module, a train traveling duration detection module, and a train power supply mode detection module.

When a dual-voltage train is traveling between a regional railroad and an urban rail transit, since the train is powered by the alternating current in the regional railroad and powered by the direct current in the urban rail, an automatic conversion region is provided at the junction of the regional railroad and the urban rail, and landmarks are provided in the partition beside the rail of the conversion region, in order to facilitate the conversion of the power supply unit of the train. When the train passes through each landmark, the landmark detection module uses an electromagnetic induction device to detect the landmark, and upon successful detection, it triggers the train to automatically perform the corresponding action to complete the conversion of the power supply unit.

When a dual-voltage train travels between each landmark in the conversion region, the traveling speed of the train is measured by the train speed detection module. Specifically, the train detects the mileage at a fixed period T, and obtains the traveling speed of the train by the calculus operation, wherein the period T is 15ms-25ms, preferably T is 20ms.

The train traveling duration detection module is configured to detect a duration of the train passing through each of the landmarks, and to transmit multiple time point data to the central control unit, so as to obtain the traveling duration of the train between two adjacent landmarks through calculation.

The train power supply mode detection module is configured to detect a present power supply status of the train. Specifically, the train is in the direct-current power supply mode or the alternating-current power supply mode.

The conversion unit is configured to convert the power supply unit of the train; the conversion unit includes an alternating current/direct current conversion switch; and the alternating current/direct current conversion switch is configured to specifically select the direct-current power supply module or the alternating-current power supply module.

The power supply unit includes the direct-current power supply module and the alternating-current power supply module. When the train travels on the urban rail, the alternating current/direct current conversion switch is electrically connected to the direct-current power supply module, and when the train travels on the regional railroad, the alternating current/direct current conversion switch is electrically connected to the alternating-current power supply module.

The power supply unit is connected to the detection unit and the conversion unit respectively to realize the detection of the power supply mode through the detection unit and the selection and conversion to the power supply module through the conversion unit.

The central control unit includes an arithmetic module, a first determination module, a second determination module, and a storage module.

The central control unit is connected to the detection unit and the conversion unit respectively. When the landmark detection module of the detection unit detects that the train passes through each landmark, the detection signal is transmitted to the central control unit, so that the central control unit controls the train to automatically perform corresponding actions on the high and low voltage electrical appliances on the train.

The arithmetic module is configured to calculate a mileage of the train based on the traveling speed of the train and the duration of the train passing through each of the landmarks.

The first determination module is configured to determine whether the train successfully detects each of the landmarks. The landmark detection module is configured to transmit the signal detected when the train passes through each landmark to the first determination module. If the signal is successfully detected, the first determination module drives the train to perform the corresponding action on the appliance of each voltage level on the train; and if the signal is failed to be detected, the train is unable to automatically perform the corresponding action on the appliance of each voltage level on the train.

The second determination module is configured to determine whether the train reaches each of the landmarks, and the storage module is configured to store distance information between two adjacent landmarks and a landmark level classification mode. Specifically, the second determination module is connected to an arithmetic module and a storage module respectively, wherein the second determination module acquires specific mileage data of the train by the arithmetic module; the second determination module acquires distance data between two adjacent landmarks by the storage module; and the second determination module determines whether the train reaches each landmark by comparing the specific mileage data of the train with the distance data between two adjacent landmarks.

The landmark level classification mode includes at least two landmark levels. Specifically, when the landmarks are classified into the first level landmark and the second level landmark, on one hand, when both the first level landmark and the second level landmark are respectively detected by the train, it performs the corresponding action; and on the other hand, when the first level landmark is successfully detected by the train but the second level landmark is failed to be detected, it normally performs the corresponding action when the second determination module determines that the train reaches each second level landmark. Specifically, when the landmarks are classified into the first level landmark, the second level landmark, and the third level landmark, on one hand, when the first level landmark, the second level landmark, and the third level landmark are all successfully detected by the train, it performs the corresponding action; and on the other hand, when the first level landmark or the second level landmark is successfully detected by the train but the third level landmark is failed to be detected, it normally performs the corresponding action when the second determination module determines that the train reaches each third level landmark.

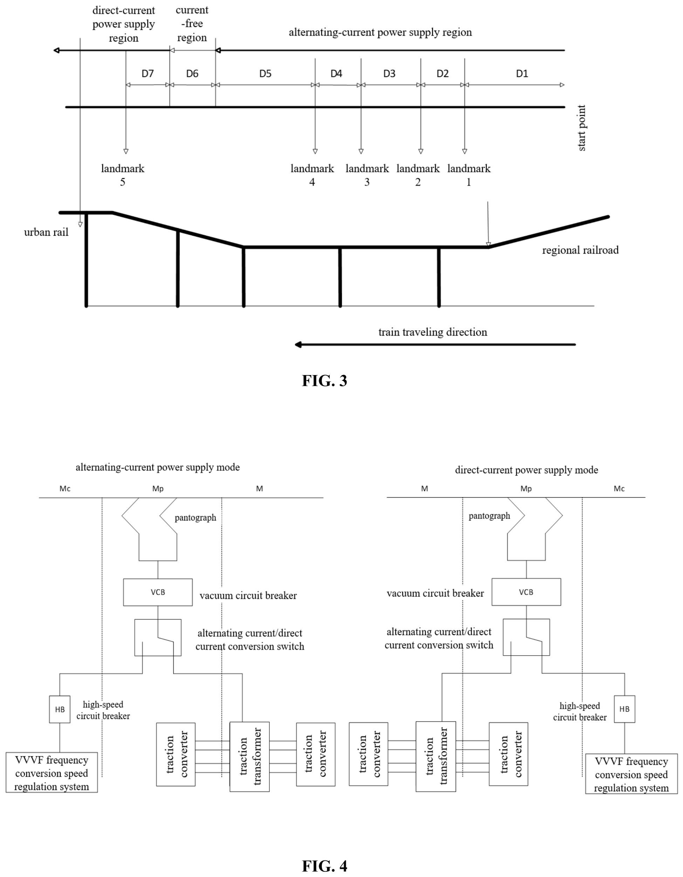

The number of the landmarks is at least five. As shown in FIG. 2 or FIG. 3, in the train traveling direction from the regional railroad to the urban rail or from the urban rail to the regional railroad, the landmark 1, landmark 2, landmark 3, landmark 4, and landmark 5 are arranged in sequence from front to back. In addition, the number of landmarks beside the rail of the conversion region can be 7 or 8, and the specific number of landmarks to be set depends on the classification precision and the prompt degree to the power supply conversion action when the train passes through the conversion region.

FIG. 2 shows a conversion schematic diagram from a direct-current power supply region to an alternating-current power supply region of a dual-voltage train power supply conversion system in the embodiments of the present disclosure. When the train passes from the direct-current power supply region to the alternating-current power supply region, the train needs to complete the following actions:
the train being about to enter the conversion region when the train receives the ground landmark 1, and the system beginning to calculate the train mileage;
the train performing a coasting command when the train receives the ground landmark 2, reducing a load of an air conditioner of the train to 0, and performing a disconnecting action on an auxiliary contactor and a traction contactor; and the system recalculating the train mileage;
disconnecting a vacuum circuit breaker when the train receives the ground landmark 3;
performing a secondary detection on the conversion unit and the power supply unit when the train reaches the landmark 4, forcibly disconnecting the vacuum circuit breaker, and switching the alternating current/direct current conversion switch to the alternating-current power supply mode; and
connecting the vacuum circuit breaker when the train reaches the landmark 5, starting a traction converter and a traction transformer, and performing a disconnecting action on the high-speed circuit breaker; and the train passing through the conversion region safely.

FIG. 3 shows a conversion schematic diagram from an alternating-current power supply region to a direct-current power supply region of a dual-voltage train power supply conversion system in the embodiments of the present disclosure. When the train passes from the alternating-current power supply region to the direct-current power supply region, the train needs to complete the following actions:
the train being about to enter the conversion region when the train receives the ground landmark 1, and the system beginning to calculate the train mileage;
the train performing a coasting command when the train receives the ground landmark 2, reducing a load of an air conditioner of the train to 0, and performing a disconnecting action on an auxiliary contactor and a traction contactor; and the system recalculating the train mileage;
disconnecting a vacuum circuit breaker when the train receives the ground landmark 3;
performing a secondary detection on the conversion unit and the power supply unit when the train reaches the landmark 4, forcibly disconnecting the vacuum circuit breaker, and switching the alternating current/direct current conversion switch to the direct-current power supply mode; and
connecting the vacuum circuit breaker and disconnecting a traction converter and a traction transformer when the train reaches the landmark 5, performing a connecting action on the high-speed circuit breaker, and the train passing through the conversion region safely.

When the train passes the ground landmark 2, through actions of reduction of the air conditioner load and disconnection of contactor, the high load on the train is disconnected before the train performs the action of the alternating current/direct current conversion, which avoids damage to the high load caused by the power supply conversion.

FIG. 4 shows a topology diagram of a high-voltage circuit of a dual-voltage train power supply conversion system in the embodiments of the present disclosure. The high-voltage circuit includes a pantograph, a vacuum circuit breaker, an alternating current/direct current conversion switch, a high-speed circuit breaker, a VVVF frequency conversion speed regulation system, a traction converter, and a traction transformer. Under the normal power supply conditions, the vacuum circuit breaker is connected. When the train is in the alternating-current power supply mode, the alternating current/direct current conversion switch is switched to the alternating-current power supply module, at which time the high-speed circuit breaker is disconnected and the traction converter and the traction transformer are connected. When the train is in the direct-current power supply mode, the alternating current/direct current conversion switch is switched to the direct-current power supply module, at which time the high-speed circuit breaker is connected and the traction converter and the traction transformer are disconnected.

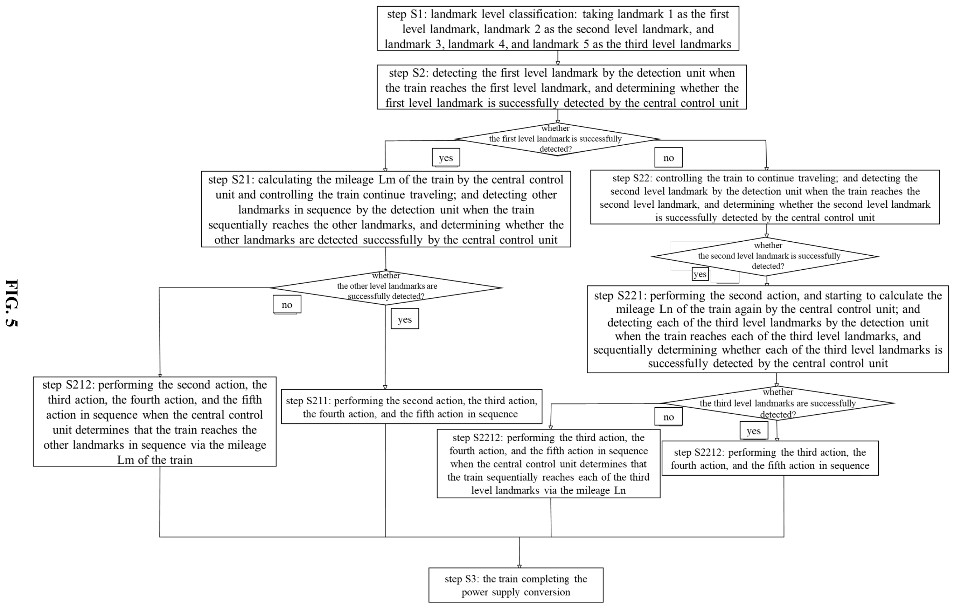

FIG. 5 shows a flow diagram of a conversion method for a dual-voltage train power supply conversion system in the embodiments of the present disclosure. The method includes the following steps S1~S3.

Step S1: classifying the five landmarks in the power supply conversion region into different levels, and ensuring that all landmarks are classified into not less than two levels. Specifically, when adopting the five-landmark solution, the landmark 1 can be classified as a first level landmark, the landmark 2 as a second level landmark, and the landmark 3, the landmark 4, and the landmark 5 as the third level landmarks, or the landmark 1 can be classified as the first level landmark, and the landmark 2, the landmark 3, the landmark 4, and the landmark 5 as the second level landmarks.

When the traditional dual-voltage train passes through the alternating current/direct current conversion region, since the landmarks beside the rail are not classified into levels, the train detects each landmark by relying only on the detection device on the train. In this way, if a landmark is lost or the train fails to detect the landmark, the train corresponding to the landmark will fail to perform the action, thereby affecting the reliability of the alternating current/direct current power supply conversion, or causing damage to the train electrical device even if the conversion is normal. The present disclosure classifies the landmarks arranged beside the rail of the alternating current/direct current conversion region, and performs different actions when the train passes through based on different landmark levels.

Step S2: detecting the first level landmark by the detection unit when the train reaches the first level landmark, and determining whether the first level landmark is successfully detected by the central control unit.

Step S21: starting to calculate the mileage Lm of the train by the central control unit when the first level landmark is successfully detected by the train, and the train continuing traveling.

Step S22: controlling the train to continue traveling when the train fails to detect the first level landmark.

The present disclosure takes the first level landmark as a first starting point for the calculation of the train mileage, and provides a first reference base point for the position determination of the subsequent landmarks through the successful positioning of the first level landmark. The first level landmark can be taken as a prompt point for the train entering the conversion region.

Regarding the step S21, after the train continues traveling, when the train reaches other landmarks in sequence, the other landmarks are detected in sequence by the detection unit. It further includes step S211 or step S212.

Step S211: performing a second action, a third action, a fourth action, and a fifth action in sequence when the other landmarks are successfully detected by the train.

Step S212: performing the second action, the third action, the fourth action, and the fifth action in sequence when the central control unit sequentially determines that the train reaches the other landmarks in sequence via the mileage Lm of the train, in response to the train failing to detect the other landmarks.

Specifically, when the train successfully detects the second level landmark and/or the central control unit determines that the train reaches the second level landmark through the mileage Lm, the second action specifically includes: performing the coasting command by the train, reducing a load of the air conditioner of the train to 0, and performing a disconnecting action on the auxiliary contactor and the traction contactor.

When the train successfully detects the third level landmark and/or the central control unit determines that the train reaches the third level landmark through the mileage Lm, it performs the third action, the fourth action, or the fifth action.

When the train reaches the landmark 3, the third action specifically includes: disconnecting the vacuum circuit breaker.

When the train reaches the landmark 4, the fourth action specifically includes: performing the secondary detection on the conversion unit and the power supply unit, forcibly disconnecting the vacuum circuit breaker, and switching the alternating current/direct current conversion switch to the alternating-current power supply module or the direct-current power supply module.

When the train reaches the landmark 5, the fifth action specifically includes: connecting the vacuum circuit breaker, performing a disconnecting or connecting action on the traction converter and the traction transformer, and performing a disconnecting or connecting action on a high-speed circuit breaker; and the train passing through the conversion region safely. Specifically, it includes: performing the disconnecting action on the high-speed circuit breaker and performing the connecting action on the traction converter or the traction transformer when the train switches from the direct-current power supply module to the alternating-current power supply module; or performing the disconnecting action on the traction converter and the traction transformer and performing the connecting action on the high-speed circuit breaker when the train switches from the alternating-current power supply module to the direct-current power supply module.

Regarding the step S22, after the train continues traveling, the detection unit detects the second level landmark when the train reaches the second level landmark, and the central control unit determines whether the second level landmark is successfully detected.

Step S221: performing the action corresponding to the second level landmark when the second level landmark is successfully detected by the train, and starting to calculate a mileage Ln of the train by the central control unit at the same time; and detecting each of the third level landmarks in sequence by the detection unit when the train sequentially reaches each third level landmark, and sequentially determining whether each of the third level landmarks is successfully detected by the central control unit.

Step S2211: performing the third action, the fourth action, and the fifth action in sequence when each of the third level landmarks is successfully detected by the train.

Step S2212: performing the third action, the fourth action, and the fifth action in sequence when the central control unit determines that the train sequentially reaches each of the third level landmarks via the mileage Ln of the train, in response to the train failing to detect each of the third level landmarks.

The corresponding action of each of the third level landmarks is as mentioned before and will not be repeated herein.

Step S3: the train completing the power supply conversion.

It should be noted that when the train fails to detect the first level landmark and the second level landmark, the train still continues to drive, and each subsequent third level landmark will be detected. If the detection is successful, the train will automatically perform the corresponding action, which is the prior art. If the detection fails, the train can be switched to the alternating current/direct current conversion switch with load or fail to complete the alternating current/direct current conversion, either of which will cause damage to the train electrical device.

The second level landmark is located behind the first level landmark in the train traveling direction. The second level landmark, on the one hand, serves as a preparation for power supply conversion of the train, and on the other hand, acts as a second starting point for the calculation of the mileage of the train. Therefore, when the train fails to detect the first level landmark, the mileage of the train can be recalculated by the second level landmark, that is, a double starting point is formed by the first level landmark and the second level landmark. In case that either the first level landmark or the second level landmark is successfully detected, it provides a reliable guarantee for the subsequent train at each third level landmark to automatically perform the switching action, thereby enhancing the reliability of the dual-voltage train alternating current/direct current power supply conversion.

Specifically, the train performs the coasting command by a power switch and switches to a coasting mode (i.e., unpowered driving mode) at the second level landmark.

When the train fails to detect the second level landmark, if the train successfully detects the first level landmark and the central control unit determines that the train reaches the second level landmark through the mileage Lm, it performs the coasting command on the train, reduces a load of the air conditioner of the train to 0, and performs a disconnecting action on the auxiliary contactor and the traction contactor.

When the train fails to detect the second level landmark, since the storage module of the power supply conversion system of the train has pre-stored the distance data between two adjacent landmarks, when the train passes through the second level landmark from the first level landmark, the second determination module calculates the mileage of the train by using the traveling speed and duration information of the train, and determines whether the train reaches the second level landmark by comparing the distance data with the driving mileage data. Therefore, the corresponding power supply conversion action can still be reliably performed even if the train fails to detect the second level landmark.

Specifically, the distance between landmark 1 and landmark 2 is 80-120 m; the distance between landmark 2 and landmark 3 is 180-220 m; the distance between landmark 3 and landmark 4 is 100-140 m; and the distance between landmark 4 and landmark 5 is 425-465 m. The above distances can be adjusted according to the length of the train and the condition of the conversion region.

It should be noted that, when the train successfully detects or determines that the train has passed through the landmark 3 and performed the disconnecting action on the vacuum circuit breaker, in order to ensure the reliability of power supply conversion, the train performs a secondary detection and forcibly performs the circuit breaker disconnection action when the train successfully detects or determines that it has passed through the landmark 4.

The disconnecting action of the train high-voltage device corresponding to the third level landmark plays a decisive role in the successful conversion of the train power supply conversion. Therefore, the successful detection or position determination of the third level landmark is of utmost importance. The present disclosure further utilizes the first level landmark and the second level landmark to form a dual insurance based on the traditional method of automatically detecting each third level landmark by only using the train. Specifically, when the train successfully detects the first level landmark, it can be determined whether the train reaches each third level landmark by calculating the mileage Lm from the first level landmark; or when the train successfully detects the second level landmark, it can be determined whether the train reaches each third level landmark by calculating the mileage Ln from the second level landmark. That is to say, when the first level landmark and/or the second level landmark are successfully detected, it ensures the reliable conversion of the electrical equipment at each voltage level when the train is at each third level landmark, thereby enhancing the reliability of the dual-voltage train alternating current/direct current power supply conversion.

### Embodiment 2

Based on the technical solutions in Embodiment 1, the dual-voltage train power supply conversion system further includes: an audio-visual prompt unit and a manual conversion unit.

The audio-visual prompt unit is connected to the detection unit and the central control unit respectively, and the audio-visual prompt unit includes a sound prompt module and a light prompt module. When the landmark detection unit detects that the train passes through each landmark and/or when the central control unit determines that the train reaches each landmark, the cab reminds the driver by the sound prompt module and the light prompt module, so that the driver observes the high-voltage device switching state of the train in time. In addition, the light prompt module further includes indicator lights corresponding to the pantograph, vacuum circuit breaker, alternating current/direct current conversion switch, high-speed circuit breaker, VVVF frequency conversion speed regulation system, traction converter, and traction transformer in the train high-voltage system, which facilitates the driver to observe the high-voltage device switching state of the train.

The manual conversion unit includes, but is not limited to a handle, buttons, and switches arranged on the driver console in the cab, and the manual conversion unit can correspondingly control the high-voltage device of the train. When the cab reminds the driver, through the sound prompt module and the light prompt module, that the train reaches each landmark, but the train fails to perform the corresponding conversion action at the landmark, the train can be controlled manually by the driver, so as to further ensure the reliable conversion of the alternating current/direct current power supply of the train.

### Embodiment 3

Based on the technical solutions in Embodiment 1 and Embodiment 2, the detection unit of the train power supply conversion system further includes an image acquisition recognition module; the audio-visual prompt unit further includes a display screen module; and the image acquisition recognition module is connected to the display screen module. Specifically, the image acquisition recognition module is a photographic or camera device, and text prompt signs are respectively provided on each corresponding landmark beside the rail of the alternating current/direct current conversion region. On the one hand, the driver can observe each text prompt sign in the cab; and on the other hand, when the train reaches each landmark, the image acquisition recognition module can collect and recognize the text prompt signs, and display the corresponding text on the display screen for the driver to view. It overcomes the defect that the driver cannot clearly view the text prompt signs under special weather conditions, which ensures the reliable monitoring of the driver and guarantees the reliability of the train alternating current/direct current power supply conversion.

### Embodiment 4

The present disclosure further provides a dual-voltage train. The train includes the dual-voltage train power supply conversion system according to any one of Embodiment 1, Embodiment 2, and Embodiment 3. The train can further implement a dual-voltage train power supply conversion method in Embodiment 1.

### Embodiment 5

The present disclosure further provides a storage medium, wherein the storage medium is readable and writable in a computer, and the storage medium is configured to store a dual-voltage train power supply conversion method in Embodiment 1.

The present disclosure is described with reference to flowcharts and/or block diagrams of method, device (system), and computer program product according to the embodiments of the present disclosure. It should be understood that each of the processes and/or blocks in the flowchart and/or the block diagram, and the combination of the processes and/or blocks in the flowchart and/or the block diagram, can be implemented by computer program instructions. These computer program instructions can be provided to the processors of general-purpose computers, special-purpose computers, embedded processors, or other programmable data processing devices to produce a machine, so that the instructions are performed by the processor of the computer or other programmable data processing device, so as to implement the functions specified in one or more flows of the flowchart and/or one or more blocks of the block diagram.

These computer program instructions may also be stored in a computer-readable memory that can direct a computer or other programmable data processing apparatus to operate in a particular manner, such that the instructions stored in the computer-readable memory produce an article of manufacture including instruction means for implementing the functions specified in one or more processes of the flowchart and/or one or more blocks of the block diagram.

These computer program instructions can also be loaded onto computers or other programmable data processing devices, so that a series of operation steps to be executed on the computer or other programmable devices, so as to realize the computer processing. Therefore, the instructions executed on a computer or other programmable device provide the steps for achieving the specified functions in one or more flows of the flowchart or in one or more blocks of the block diagram.

Finally, it should be noted that the above embodiments are only specific embodiments of the present disclosure, which are used to describe the technical solutions of the present disclosure, rather than to limit it, and the scope of protection of the present disclosure is not limited to this. Although the present disclosure is described in detail with reference to the foregoing embodiments, it should not be difficult for a person skill in the art to understand that within the scope of the technology disclosed herein, any technical person familiar with the technical field can still modify or easily think of changes to the technical solutions recorded in the foregoing embodiments, or make equivalent replacement for partial technical features therein; and these modification, changes, or replacement shall not remove the essence of the corresponding technical solution from the spirit and scope of the technical solutions of each embodiment of the present disclosure, and they are all within the scope of protection of the present disclosure. Therefore, the scope of protection of the present disclosure shall be governed by the scope of protection of the claims.

## Claims

1. A dual-voltage train power supply conversion system, wherein
the system comprises: a detection unit, a conversion unit, a power supply unit, and a central control unit;
the detection unit comprises a landmark detection module, a train speed detection module, a train traveling duration detection module, and a train power supply mode detection module, wherein the landmark detection module is configured to detect landmarks, so as to trigger an action of the conversion unit; the train speed detection module is configured to measure a train traveling speed; the train traveling duration detection module is configured to detect a duration of the train passing through each of the landmarks; and the train power supply mode detection module is configured to detect a power supply status of the train;
the conversion unit is configured to convert the power supply unit of the train;
the power supply unit comprises a direct-current power supply module and an alternating-current power supply module, and the power supply unit is connected to the detection unit and the conversion unit respectively;
the central control unit comprises an arithmetic module, a first determination module, a second determination module, and a storage module, wherein the central control unit is connected to the detection unit and the conversion unit respectively; the arithmetic module is configured to calculate a mileage of the train based on a traveling speed of the train and the duration of the train passing through each of the landmarks; the first determination module is configured to determine whether the train successfully detects each of the landmarks; the second determination module is configured to determine whether the train reaches each of the landmarks; the storage module is configured to store distance information between two adjacent landmarks and a landmark level classification mode; the landmark level classification mode comprises at least two landmark levels; and
the number of the landmarks is at least five.

2. The dual-voltage train power supply conversion system according to claim 1, wherein the landmark level classification mode comprises a first level landmark, a second level landmark, and third level landmarks, and the landmark detection module detects the first level landmark, the second level landmark, and the third level landmarks in sequence from front to back according to a train traveling direction.

3. The dual-voltage train power supply conversion system according to claim 2, wherein the first determination module is connected to the landmark detection module, and the second determination module is connected to the arithmetic module and the storage module respectively.

4. The dual-voltage train power supply conversion system according to claim 1, wherein
the system further comprises an audio-visual prompt unit; the audio-visual prompt unit is connected to the detection unit and the central control unit respectively; and the audio-visual prompt unit comprises a sound prompt module, a light prompt module, and a display screen module; and
the detection unit further comprises an image acquisition recognition module, wherein the image acquisition recognition module is connected to the display screen module.

5. The dual-voltage train power supply conversion system according to any one of claims 1-4, wherein
the system further comprises a manual conversion unit, and the manual conversion unit is connected to the detection unit and the central control unit respectively.

6. The dual-voltage train power supply conversion system according to claim 5, wherein the conversion unit comprises an alternating current/direct current conversion switch.

7. A dual-voltage train power supply conversion method, applicable to the dual-voltage train power supply conversion system according to any one of claims 2 to 6, wherein
the method comprises following steps S1 to S3:
step S1, classifying the five landmarks in the power supply conversion region into different levels, wherein the first level landmark comprises landmark 1; the second level landmark comprises landmark 2; and the third level landmarks comprise landmark 3, landmark 4, and landmark 5;
step S2, detecting the first level landmark by the detection unit when the train reaches the first level landmark, and determining whether the first level landmark is successfully detected by the central control unit:
step S21, starting to calculate the mileage Lm of the train by the central control unit when the first level landmark is successfully detected by the train, and controlling the train to continue traveling; and detecting other landmarks in sequence by the detection unit when the train sequentially reaches the other landmarks, and determining whether the other landmarks are detected successfully by the central control unit:
step S211, performing a second action, a third action, a fourth action, and a fifth action in sequence when the other landmarks are successfully detected by the train;
step S212, performing the second action, the third action, the fourth action, and the fifth action in sequence when the central control unit determines that the train reaches the other landmarks in sequence via the mileage Lm of the train, in response to the train failing to detect the other landmarks;
step S22, controlling the train to continue traveling when the train fails to detect the first level landmark; and detecting the second level landmark by the detection unit when the train reaches the second level landmark, and determining whether the second level landmark is successfully detected by the central control unit:
step S221, performing the second action when the second level landmark is successfully detected by the train, and starting to calculate a mileage Ln of the train again by the central control unit at the same time; and detecting each of the third level landmarks in sequence by the detection unit when the train sequentially reaches each of the third level landmarks, and sequentially determining whether each of the third level landmarks is successfully detected by the central control unit:
step S2211, performing the third action, the fourth action, and the fifth action in sequence when each of the third level landmarks is successfully detected by the train;
step S2212, performing the third action, the fourth action, and the fifth action in sequence when the central control unit determines that the train sequentially reaches each of the third level landmarks via the mileage Ln of the train, in response to the train failing to detect each of the third level landmarks, wherein
the second action comprises: performing a coasting command by the train, reducing a load of an air conditioner of the train to 0, and performing a disconnecting action by an auxiliary contactor and a traction contactor;
the third action comprises: disconnecting a vacuum circuit breaker;
the fourth action comprises: performing a secondary detection on the conversion unit and the power supply unit by the train, forcibly disconnecting the vacuum circuit breaker, and switching the alternating current/direct current conversion switch to the alternating-current power supply module or the direct-current power supply module; and
the fifth action comprises: connecting the vacuum circuit breaker, performing a disconnecting or connecting action on the traction converter and the traction transformer, and performing a disconnecting or connecting action on a high-speed circuit breaker; and
step S3: the train completing the power supply conversion.

8. The dual-voltage train power supply conversion method according to claim 7, wherein
the fifth action further comprises:
performing the disconnecting action on the high-speed circuit breaker and performing the connecting action on the traction converter and the traction transformer when the train switches from the direct-current power supply module to the alternating-current power supply module; or performing the disconnecting action on the traction converter and the traction transformer and performing the connecting action on the high-speed circuit breaker when the train switches from the alternating-current power supply module to the direct-current power supply module.

9. A dual-voltage train, comprising the dual-voltage train power supply conversion system according to any one of claims 1 to 6.

10. A storage medium, wherein the storage medium is readable and writable in a computer, and the storage medium is configured to store the dual-voltage train power supply conversion method according to claim 7 or 8.
